# EUROPEAN PATENT SPECIFICATION

(11) **EP 1 810 066 B1**
(45) Date of publication and mention of the grant of the patent: **06.08.2008**
(21) Application number: 05811365.5
(22) Date of filing: 21.09.2005
(51) Int. Cl.: G02B 7/182

(54) **A GIMBAL MOUNT DEVICE FOR SUPPORTING A FUNCTIONAL ELEMENT**
AUFHÄNGUNGSANBRINGEINRICHTUNG ZUM TRAGEN EINES FUNKTIONSELEMENTS
DISPOSITIF DE CARDAN POUR SUPPORTER UN ÉLÉMENT FONCTIONNEL

(30) Priority: 01.10.2004 EP 04023432
(43) Date of publication of application: 25.07.2007
(73) Proprietor: PAUL SCHERRER INSTITUT, 5232 Villigen PSI (CH)
(72) Inventor: ROHRER, Martin, CH-5330 Zurzach (CH); ROSSETTI, Daniel, CH-5312 Döttingen (CH); ZELENIKA, Sasa, HR / HR - 51000 Rijeka (HR)
(74) Representative: Fischer, Michael
(86) International application number: PCT/EP2005/010214
(87) International publication number: WO 2006/037476

(56) References cited:
- US-A- 4 023 891
- US-A1- 2002 060 200
- US-A1- 2003 202 234
- US-A1- 2004 004 775
- US-B1- 6 411 447
- PATENT ABSTRACTS OF JAPAN vol. 009, no. 257 (P-396), 15 October 1985 (1985-10-15) -& JP 60 107017 A (HITACHI SEISAKUSHO KK), 12 June 1985 (1985-06-12)
- NOLL T ET AL: "THE MONOLITHIC TWO AXIS FLEXURE JOINED MIRROR SUPPORT AND THE MECHANICAL DESIGN OF THE INFRARED BEAMLINE" 2ND INTERNATIONAL WORKSHOP ON MECHANICAL ENGINEERING DESIGN OF SYNCHROTRON RADIATION EQUIPMENT AND INSTRUMENTATION MEDSI02, 5 September 2002 (2002-09-05), - 6 September 2002 (2002-09-06) pages 65-73, XP002320603 ARGONNE, ILLINOIS, USA cited in the application

## Description

The present invention relates to a monolithic device for supporting a functional element, such as a deflecting element for deflecting electromagnetic radiation, i.e. originating form a laser beam or any other photon beam.

Such devices are known in the art as compliant (weak link) mechanism, too. The need for such devices exists in various technical and scientific instruments involving small, controllable movements to provide high sensitivity while maintaining stability in the positioning of an element or elements, such as an optical mirror or deflecting elements. Technical applications are, for instance, the deflection of optical signals into different optical fibres in an optical telecommunication switch. Another example is the use of such compliant mechanism to redirect by deflection a femto-pulsed laser beam, like in an electron storage ring, such as a synchroton, one of them known as the Swiss Light Source (SLS) located at the Paul Scherrer Institute in Villigen, Switzerland.

Several devices have been disclosed in the prior art. In US patent 6,607,840, a redundantly constrained laminar structure as weak link mechanism and a method for manufacturing the same are disclosed. The method for producing the redundantly constrained laminar structures to be assembled into a weak-link mechanism is carried out by lithographic techniques. A designed pattern is repeatedly chemically etched with a mask to produce a plurality of individual identical units. The units are stacked together to form the laminar structure and are secured together with fasteners. A high quality adhesive can be applied to the sides of the laminar structure to provide the mechanism equivalent to a single piece mechanism. The redundantly constrained laminar structures as weak-link mechanisms include a stack of a plurality of thin material structures. The stack of structures forming a laminar structure include multiple weak-link connections providing controllable movements in a plane of the layer and having a desired stiffness and stability. The plurality of thin material structures include predetermined locating-holes used with locating-pins to precisely stack the thin material structures together and are used with fasteners to secure the stack together.

Another weak-link mechanism is disclosed in the conference proceedings "The Monolithic Two Axis Flexure Joined Mirror Support and the Mechanical Design of the Infrared Beamlin; T. Noll, C. Kalus, W.B. Peatman, U. Schade and W.v. Scheibner; 2nd International Workshop on Mechanical Engineering Design of Synchrotron Radiation Equipment and Instrumentation (MEDSI02) September 5-6, 2002, Pages 65 to 73 - Advanced Photon Source, Argonne National Laboratory, Argonne, Illinois, USA". This document discloses a movable mirror support which consists of a lightweight monolithic aluminium body with several flexures. Along with the static support of the mirror and its elastic mount it works as flexural guidance for two rotations of the mirror. Both rotational axis are parallel to the surface of the mirror, normal to each other and cross at the midpoint of the mirror surface. In Figure 3 of said document the adjustable mirror unit and its rotational axis is shown. Stepper motors drive linear motion via feedthroughs which are connected to the mirror support by struts with flexure fibre joints at their ends. In Figure 4 of said document the multiple parallel flexure hinge patterns are represented. The systems of each axis interpenetrate in two orthogonal views. The figure shows the monolithic aluminium body without the mirror in two directions. The view planes are normal to the rotational axes to display the mode of action of the strut patterns. For the rotation around the z-axis five flexure hinged strut rows are operating in parallel. The rotation around the x-axis is guided by seven rows of flexural hinges-based struts which also work in parallel. The interpenetration of the weak link arrays produces thirty-five single struts where the grooved bending joint zones are located on different positions along each strut. Thus, the joints are essentially no flexure ball joints. The high level of parallelism leads to a high stiffness and reduces parasitic motions.

Unfortunately, both different solutions for the weak-link mechanism known from the prior art require tremendous efforts in manufacturing and assembling since the design of the mechanism is both very complicated and requires a comparably high number of joints to be realized at distinct flexure properties. Moreover, both solutions are inherently overconstrained which limits the achieved accuracies while increasing the stresses in the devices, limiting thus their motion ranges.

An adjustable mount mirror assembly is also known from US 4 023 891.

It is therefore the aim of the present invention to provide a compliant mechanisms that avoids the complexity in manufacturing and assembling the same.

This aim is achieved according to the invention by a monolithic device for supporting a functional element as defined by claim 1 of the appended claims.

These features facilitate a simple design with only three significant portions within the device to be manufactured, preferably as a monolithic body. By supporting the first holder member including the functional element by the second holder member the joints can be disposed all within the same plane which is preferably the plane of the functional element. The joints used with the present invention are characterized by the absence of friction and backlash - which, especially in high precision gimbal mount applications, constitutes a remarkable advantage in comparison to conventional sliding and rolling solutions known from the prior art. Additionally, this embodiment is a perfect fit to UHV and radiation application as well as suited for both high or cryo temperature applications.

According to the present invention the demand regarding a comparably simple design of the joints and the orientation of the different members to each other is met by a specific design of the device, comprising: said first joint formed by a first pair of pivotable legs (also indicated as flexures or flexural hinges or flexural notches) disposed for bridging said first holder member and said second holder member; said pivotable legs being disposed opposite to each other, thereby defining the first pivot axis; and/or said second joint formed by a second pair of pivotable legs disposed for bridging said second holder member and said supporting member; said second pair of pivotable legs being disposed opposite to each other, thereby defining the second pivot axis. The two pivot axes are intersecting perpendicularly in the center of said functional element and on the surface of the reflecting element (mirror).

The number of holder members and, respectively, the number of the joints and pivoting axes through which the functional element is deflected can be higher than two, providing the means to adapt the design of the said monolithic device to an arbitrary number of rotational degrees of freedom required by the specifically considered design needs.

Referring now again to the embodiment with two pivot axes, and in order to provide a simple design for the first and/or second holder member which can therefore be easily manufactured, said first holder member and/or said second holder member may be formed as a first annular member and a second annular member respectively. This feature allows the first and the second holder member having interface portions bridging the first and the second holder member and/or bridging the second holder member and the supporting member within the plane of the first and second pivot axis to be formed.

For the use of the device according to the present invention in the different applications it might be very crucial that the device may fulfill easily different demands to its key properties, such as stiffness, accuracy, resolution, precision and the like. In an additional embodiment of the present invention, the pivoting properties are therefore controllable by the shape of the first pair of pivotable legs and/or the shape of the second pair of pivotable legs. In order to establish the desired pivoting properties, any additional effort for amendments is obsolete since under the consideration of the required manufacturing efforts, it is appropriate to form those legs in the desired shape (i.e. of circular and/or of any non-circular shape).

From the view of the tensile strength it would be desirable to limit the pivoting range in order to avoid any inelastic deformation along the pivoting axes. The respective pivoting properties are therefore controllable by the shape of a first annular gap between said first holder member and said second holder member and/or by the shape of a second annular gap between said second holder member and said supporting member. Especially by controlling the width of the annular gap or the width and the length (i.e. the fillet shape between the pivotable member and the bulk material) of the flexures, an inelastic deformation can be prevented.

With respect to the manufacturing of the legs involving a preferred simplicity, the first and/or the second pair of pivotable legs may be generated by two recesses or two boreholes disposed adjacent to each other and forming the end portions of the respective first or second annular gap.

In order to enable a simple movement of the deflecting element, the first holder member and the second holder member may each comprise a flange for attaching an actuating means. Thereby, the actuating means may be realized as positioning rods providing a longitudinal shift for pivoting the first and/or the second holder member.

Since the first holder member (and of course, the deflecting element held by the first holder member) is affected when the second holder member is pivoted, the flange and the actuating means are affected as well from this pivoting. In order to neutralize this affection, the positioning means may comprise elastic joints, preferably formed as funicular portions, close to the junction of the flange and the positioning means. Preferably, the elastic joints are positioned in the plane of the first and second pivot axis.

In order to allow both the functional element, such as a deflecting element, to be disposed in the plane of the first and second pivot axis as well as to have a free space available on the opposite side of the functional element (the side which is not penetrated by the beam being deflected) giving the opportunity to dispose any additional optical and/or electromechanical equipment, such as a detector, it is advantageous when the supporting member is formed as a hollow body, preferably as a hollow cylinder.

In order to avoid both the assembling and adjustment of several components, the device can preferably be manufactured from monolithic mental, e.g. aluminium, by known metal machining techniques, such as electro-discharge machining, turning, milling, boring and the like.

Examples of the invention are hereinafter described with reference to the drawings. In the drawings:
- Figure 1: is a perspective view on a weak-link mechanism device; and
- Figure 2: is a perspective view on the weak-link mechanism device according to Figure 1, incorporated into a scientific apparatus.

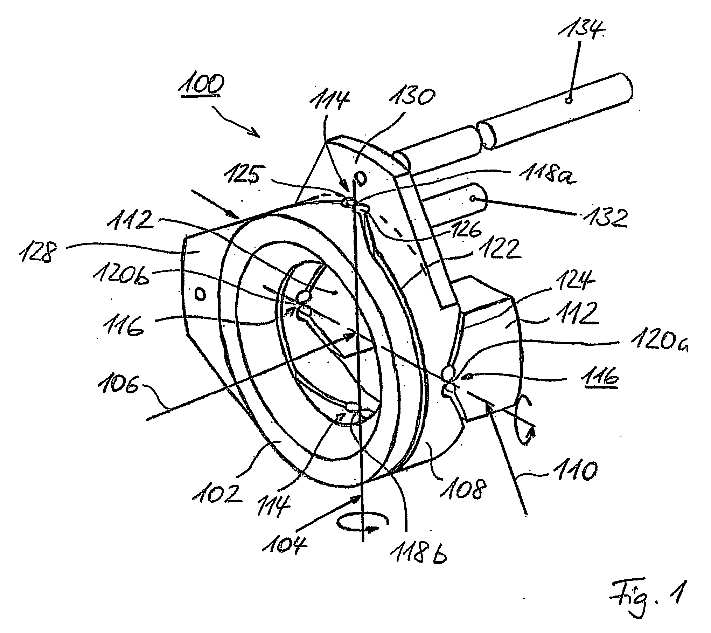

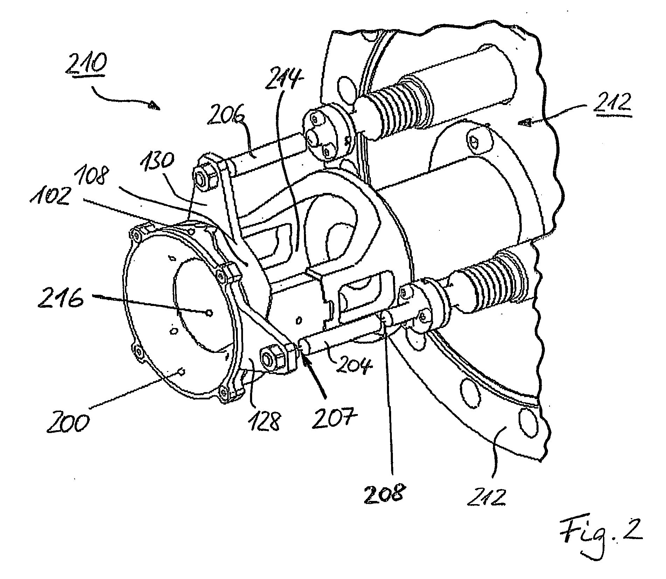

Figure 1 shows a monolithic compliant mechanism device 100, hereinafter referred to as device 100, for supporting a deflecting element 200 (indicated in Fig. 2) for deflecting electromagnetic radiation, such as a laser beam. The device 100 comprises a first holder member 102 for holding the deflecting element 200 which is characterized by the deflecting mirror 216 as functional element. The first holder member 102 is pivotable along a first pivot axis 104. This first pivot axis 104 is disposed in the plane of the deflecting element 200 which is indicated by an arrow 106 pointing on the center of this plane. A second holder member 108 is supporting the first holder member 102. This second holder member 108 itself is pivotable along a second pivot axis 110. This second pivot axis 110 is disposed in the plane of the deflecting element 200, too. The axes 104 and 110 intersect preferably perpendicular to each other in the center of said deflecting member 200 and on the surface of the reflecting element 216. The third significant part of the device 100 is a supporting member 112 which supports the second holder member 108. An interface between the first holder member 102 and the second holder member 108 is realized by a first joint 114 disposed between said first holder member 102 and said second holder member 108. Analogue, a second joint 116 is foreseen as an interface between the second holder member 108 and the supporting member 112.

The first joint 114 is formed by a first pair of pivotable legs (flexures) 118a, 118b disposed for bridging the first holder member 102 and the second holder member 108. As it can be seen from Fig. 1, the pivotable legs 118a, 118b are disposed opposite to each other, thereby defining the first pivot axis 104. Accordingly, the second joint 116 is formed by a second pair of pivotable legs 120a, 120b disposed for bridging the second holder member 108 and the supporting member 112. Likewise the first pair of pivotable legs 118a, 118b, the pivotable legs 120a, 120b are disposed opposite to each other, thereby defining the second pivot axis 110.

The pivoting properties are controllable by various parameter, such as the selected material, the shape of the first pair of pivotable legs 118a, 118b and/or the shape of the second pair of pivotable legs 120a, 120b. Additionally, the pivoting properties are controllable by the shape of a first annular gap 122 between the first holder member 102 and said second holder member 108 and/or by the shape of a second annular gap 124 between the second holder member 108 and the supporting member 112. In this embodiment, each of the pivotable legs 118a, 118b and 120a, 120b are generated by two boreholes 125, 126 (only indicated with reference numbers for leg 118a) which are disposed adjacent to each other and leading over into the respective first or second annular gap 122 and 124 resp.

Due to the provision of the annular gaps 122 and 124, the first holder member 102 can be considered to form a first gimbal axis. This applies accordingly to the second holder member 108, too. For pivoting the first and second holder member 102, 108, each of the first holder member 102 and the second holder member 108 comprises a flange 128, 130 for attaching a positioning means 132, 134. These positioning means 132, 134 are realized as positioning rods 204, 206 (Fig. 2) providing a longitudinal shift for pivoting the first and/or the second holder member 102, 108. As depicted in Fig. 2, the positioning rods 204, 206 comprise elastic joints, in this embodiment formed as funicular portions 207, 208, which are positioned close to the junction of the flange 128, 130 and the positioning rods 204, 206. These joints 207, 208 allow the pivoting which has a unavoidable but limited impact on the position of the flanges 128, 130 to be balanced. In order to maintain the optical symmetry the elastic joints 207 is positioned in the plane of the first and second pivot axis 104, 110.

Figure 2 illustrates a perspective view on the compliant mechanism device 100 according to Figure 1, which is now incorporated into a scientific apparatus 210 which shall be represented by the illustrated portion of an UHV vessel 212. It can also be seen that the supporting member 112 is formed as a hollow body, preferably as a hollow cylinder 214 which enables the positioning of additional scientific components, such as detectors or other deflecting elements (which are here not illustrated). The deflecting element 200 is mounted to the first holder member 102. The deflecting element comprises a mirror 216 which is in this embodiment used to deflect a laser beam in order to hit an electron beam within a synchroton environment. Therefore, the positioning rods allow a pivoting of the first and/or second holder member 102, 108 down to an accuracy of 1 µrad which lays in the range of the thickness of a human hairs on a distance of 100 m. For the purpose of the UHV arrangement, the device 100 is preferably manufactured monolithically from metal, e.g. aluminium, by known metal machining techniques, such as electro-discharge machining, turning, milling, boring and the like. Especially, the fine structures in the joints portion 114 and 116 can be manufactured by electro-discharge machining.

## Claims

1. A monolithic device (100) for supporting a functional element, such as a deflecting element (200, 216) for deflecting electromagnetic radiation, in applications requiring a high-precision gimbal-mount of said functional element, comprising:
a) a first holder member (102) for the functional element (200) being pivotable along a first pivot axis (104); said first pivot axis (104) being disposed in the plane of the functional element (200, 216);
b) a second holder member (108) for the first holder member (102); said second holder member (108) being pivotable along a second pivot axis (110), said second pivot axis (110) being disposed in the plane of the functional element (200, 216);
c) a supporting member (112) for the second holder member (108); wherein the first holder member (102) and the second holder member (104) and the supporting member (112) forming a hollow body, such as a hollow cylinder,
d) a first joint (114) disposed between said first holder member (102) and said second holder member (108) and a second joint (116) disposed between said second holder member (108) and said supporting member (112); and wherein
e) pivoting either the first holder member (102) individually or the second holder member (108) individually or both the first and the second holder member (108) is achieved by an elastic deflection of either the first or the second joint (114, 116) or both the first and the second joint (114, 116) whereby
f) said first joint (114) is formed by a first pair of pivotable legs (118a, 118b) disposed for bridging said first holder member (102) and said second holder member (108); said pivotable legs (118a, 118b) being disposed opposite to each other, thereby defining the first pivot axis (104);
g) said second joint (110) is formed by a second pair of pivotable legs (120a, 120b) disposed for bridging said second holder member (108) and said supporting member (112); said second pair of pivotable legs (120a, 120b) being disposed opposite to each other, thereby defining the second pivot axis (110);
h) the pivoting range is limited by the shape of a first annular gap (122) between said first holder member (102) and said second holder member (108) and/or by the shape of a second annular gap (124) between said second holder member (108) and said supporting member (112); and
i) the first and/or the second pair of pivotable legs (118a, 118b, 120a, 120b) are generated by two circular or non-circular recesses or two boreholes (125, 126) disposed adjacent to each other and leading over into the respective first or second annular gap (122, 124).

2. The device according to any of the preceding claims,
**characterized in that**
said first holder member (102) is formed as a first annular member.

3. The device according to any of the preceding claims,
**characterized in that**
said second holder member (108) is formed as a second annular member.

4. The device according to any of the preceding claims,
**characterized in that**
the first holder member (102) and the second holder member (108) comprises each a flange (128, 130) for attaching a positioning means (132, 134).

5. The device according to claim 4,
**characterized in that**
the positioning means (132, 134) are realized as positioning rods (204, 206) providing a longitudinal shift for pivoting the first and/or the second holder member (102, 108).

6. The device according to claim 4 or 5,
**characterized in that**
the positioning means (204, 206) comprise elastic joints, preferably formed as funicular portions (207, 208), close to the junction of the flange (128, 130) and the positioning means (132, 134).

7. The device according to claim 6,
**characterized in that**
the elastic joints (207) are positioned in the plane of the first and second pivot axis (104, 110).

## Patentansprüche

1. Monolithische Einrichtung (100) zum Tragen eines Funktionselements, wie etwa eines Ablenkelements (200, 216) zum Ablenken elektromagnetischer Strahlung, bei Anwendungen, die eine kardanische Aufhängung hoher Präzision des besagten Funktionselements erfordern, umfassend:
a) ein erstes Halterelement (102) für das Funktionselement (200), das schwenkbar entlang einer ersten Schwenkachse (104) ist; wobei die besagte erste Schwenkachse (104) in der Ebene des Funktionselements (200, 216) angeordnet ist;
b) ein zweites Halterelement (108) für das erste Halterelement (102); wobei das besagte zweite Halterelement (108) schwenkbar entlang einer zweiten Schwenkachse (110) ist, wobei die besagte zweite Schwenkachse (110) in der Ebene des Funktionselements (200, 216) angeordnet ist;
c) ein Tragelement (112) für das zweite Halterelement (108); wobei das erste Halterelement (102) und das zweite Halterelement (104) und das Tragelement (112) einen Hohlkörper bilden, wie etwa einen Hohlzylinder;
d) eine erste Verbindung (114), die zwischen dem besagten ersten Halterelement (102) und dem besagten zweiten Halterelement (108) angeordnet ist, und eine zweite Verbindung (116), die zwischen dem besagten zweiten Halterelement (108) und dem besagten Tragelement (112) angeordnet ist; und wobei
e) eine Drehung entweder des ersten Halterelements (102) allein oder des zweiten Halterelements (108) allein oder sowohl des ersten als auch des zweiten Halterelements (108) durch eine elastische Auslenkung entweder der ersten oder der zweiten Verbindung (114, 116) oder sowohl der ersten als auch der zweiten Verbindung (114, 116) erzielt wird, wobei
f) die besagte erste Verbindung (114) von einem ersten Paar von schwenkbaren Schenkeln (118a, 118b) gebildet wird, die so angeordnet sind, dass sie das besagte erste Halterelement (102) und das besagte zweite Halterelement (108) überbrücken; wobei die besagten schwenkbaren Schenkel (118a, 118b) einander gegenüber angeordnet sind, wodurch sie die erste Schwenkachse (104) definieren;
g) die besagte zweite Verbindung (110) von einem zweiten Paar von schwenkbaren Schenkeln (120a, 120b) gebildet wird, die so angeordnet sind, dass sie das besagte zweite Halterelement (108) und das besagte Tragelement (112) überbrücken; wobei das besagte zweite Paar von schwenkbaren Schenkeln (120a, 120b) einander gegenüber angeordnet ist, wodurch es die zweite Schwenkachse (110) definiert;
h) der Schwenkbereich durch die Form eines ersten ringförmigen Zwischenraumes (122) zwischen dem besagten ersten Halterelement (102) und dem besagten zweiten Halterelement (108) und/oder durch die Form eines zweiten ringförmigen Zwischenraumes (124) zwischen dem besagten zweiten Halterelement (108) und dem besagten Tragelement (112) begrenzt ist; und
i) das erste und/oder das zweite Paar von schwenkbaren Schenkeln (118a, 118b, 120a, 120b) durch zwei kreisförmige oder nicht kreisförmige Vertiefungen oder zwei Bohrlöcher (125, 126) erzeugt wird, die einander benachbart angeordnet sind und in den jeweiligen ersten oder zweiten ringförmigen Zwischenraum (122, 124) übergehen.

2. Einrichtung nach einem der vorhergehenden Ansprüche,
**dadurch gekennzeichnet, dass**
das besagte erste Halterelement (102) als ein erstes ringförmiges Element ausgebildet ist.

3. Einrichtung nach einem der vorhergehenden Ansprüche,
**dadurch gekennzeichnet, dass**
das besagte zweite Halterelement (108) als ein zweites ringförmiges Element ausgebildet ist.

4. Einrichtung nach einem der vorhergehenden Ansprüche,
**dadurch gekennzeichnet, dass**
das erste Halterelement (102) und das zweite Halterelement (108) jeweils einen Flansch (128, 130) zum Befestigen eines Positionierungsmittels (132, 134) umfassen.

5. Einrichtung nach Anspruch 4,
**dadurch gekennzeichnet, dass**
die Positionierungsmittel (132, 134) als Positionierungsstangen (204, 206) realisiert sind, die eine Längsverschiebung zum Schwenken des ersten und/oder des zweiten Halterelements (102, 108) ermöglichen.

6. Einrichtung nach Anspruch 4 oder 5,
**dadurch gekennzeichnet, dass**
die Positionierungsmittel (204, 206) elastische Gelenke, die vorzugsweise als kettenlinienförmige Abschnitte (207, 208) ausgebildet sind, in der Nähe der Verbindungsstelle des Flansches (128, 130) und der Positionierungsmittel (132, 134) umfassen.

7. Einrichtung nach Anspruch 6,
**dadurch gekennzeichnet, dass**
die elastischen Gelenke (207) in der Ebene der ersten und zweiten Schwenkachse (104, 110) positioniert sind.

## Revendications

1. Dispositif (100) monolithique pour supporter un élément fonctionnel, comme un élément (200, 216) déflecteur pour dévier un rayonnement électromagnétique, dans des applications exigeant un montage à la cardan de haute précision de l'élément fonctionnel, comprenant :
a) un premier élément (102) de fixation pour que l'élément (200) fonctionnel puisse pivoter le long d'un premier axe (104) de pivotement ; le premier axe (104) de pivotement étant disposé dans le plan de l'élément (200, 216) fonctionnel ;
b) un deuxième élément (108) de fixation pour le premier élément (102) de fixation ; le deuxième élément (108) de fixation pouvant pivoter le long d'un deuxième axe (110) de pivotement ; le deuxième axe (110) de pivotement étant disposé dans le plan de l'élément (200, 216) fonctionnel ;
c) un élément (112) de support pour le deuxième élément (108) de fixation ; le premier élément (102) de fixation et le deuxième élément (108) de fixation et l'élément (112) de support formant un corps creux, comme un cylindre creux,
d) un premier joint (114) disposé entre le premier élément (102) de fixation et le deuxième élément (108) de fixation et un deuxième joint (116) disposé entre le deuxième élément (108) de fixation et l'élément (112) de support ; et dans lequel
e) le pivotement individuel du premier élément (102) de fixation ou du deuxième (108) élément de fixation ou des premier et deuxième éléments (102, 108) de fixation est obtenu par une déviation élastique de l' un des premier ou deuxième joints (114, 116) ou des premier et deuxième joints (114, 116)
f) le premier joint (114) est formé par une première paire de pieds (118a, 118b) pivotants disposés de manière à créer un pont entre le premier élément (102) de fixation et le deuxième élément (108) de fixation ; les pieds (118a, 118b) pivotants étant disposés à l'opposé l'un de l'autre, définissant ainsi le premier axe (104) de pivotement ;
g) le deuxième joint (110) est formé par une deuxième paire de pieds (120a, 120b) pivotants disposés de manière à créer un pont entre le deuxième élément (108) de fixation et l'élément (112) de support ; les pieds (120a, 120b) pivotants de la deuxième paire étant disposés à l'opposé l'un de l'autre, définissant ainsi le deuxième axe (110) de pivotement ;
h) la gamme de pivotement est limitée par la forme d'un premier espace (122) annulaire entre le premier élément (102) de fixation et le deuxième élément (108) de fixation et/ou par la forme d'un deuxième espace (124) annulaire entre le deuxième élément (108) de fixation et l'élément (112) de support ; et
i) la première et/ou la deuxième paire de pieds (118a, 118b, 120a, 120b) pivotants sont générées par deux évidements circulaires ou non circulaires ou par deux trous (125, 126) disposés dans une position voisine l'un de l'autre et menant dans les premier ou deuxième espaces (122, 124) annulaires respectifs.

2. Dispositif selon la revendication 1, **caractérisé en ce que**
le premier élément (102) de fixation a la forme d'un premier élément annulaire.

3. Dispositif selon l'une quelconque des revendications précédentes, **caractérisé en ce que**
le deuxième élément (108) de fixation a la forme d'un deuxième élément annulaire.

4. Dispositif selon l'une quelconque des revendications précédentes, **caractérisé en ce que**
le premier élément (102) de fixation et le deuxième élément (108) de fixation comprennent chacun un rebord (128, 130) pour fixer un moyen (132, 134) de positionnement.

5. Dispositif selon la revendication 4, **caractérisé en ce que**
le moyen (132, 134) de positionnement est réalisé sous la forme de barres (204, 206) de positionnement fournissant un décalage longitudinal pour le pivotement des premier et/ou deuxième éléments (102, 108) de fixation.

6. Dispositif selon la revendication 4 ou 5, **caractérisé en ce que**
le moyen (204, 206) de positionnement comprend des joints élastiques, ayant de préférence la forme de portions (207, 208) funiculaires, près de la jonction entre le rebord (128, 130) et le moyen (132, 134) de positionnement.

7. Dispositif selon la revendication 6, **caractérisé en ce que**
les joints (207) élastiques sont positionnés dans le plan des premier et deuxième axes (104, 110) de pivotement.
